# EUROPÄISCHE PATENTANMELDUNG

(11) **EP 3 059 353 A1**
(43) Veröffentlichungstag der Anmeldung: **24.08.2016**
(21) Anmeldenummer: 16000399.2
(22) Anmeldetag: 17.02.2016
(51) Int. Cl.: E04B 1/82, G10K 11/168, G10K 11/172, B32B 5/02, B32B 5/26, B32B 5/32, B32B 3/04

(54) **SCHALLABSORBER**

(30) Priorität: 17.02.2015 DE 202015001269 U
(71) Anmelder: BOSIG GmbH, 73333 Gingen a. d. Fils (DE)
(72) Erfinder: Schmid, Oliver, D-73333 Gingen a.d. Fils (DE)
(74) Vertreter: Konle, Tilmar

(57) **Zusammenfassung**

Für einen Schallabsorber (10) mit einer porösen Dämpfungsschicht (13) wird zur Erzielung eines breiten Frequenzbereichs vorgeschlagen, die poröse Dämpfungsschicht (13) aus einem komprimierten Stapel von mehr als zwei einzelnen Dämpfungsplatten (131) auszubilden.

## Beschreibung

Die Erfindung bezieht sich auf einen Schallabsorber nach dem Oberbegriff des Anspruchs 1. Ein derartiger Schallabsorber ist aus dem Fachbuch "Schallabsorber und Schalldämpfer" von H.V. Fuchs, Springer-Verlag, 2. Auflage, Seite 56 bekannt.

Zur Dämpfung von Luftschall ist es aus dem Fachbuch "Schallabsorber und Schalldämpfer" von H.V. Fuchs, Springer-Verlag, 2. Auflage, Seite 56 bekannt, in das Schallfeld einen Schallabsorber zu stellen, welcher eine Dämpfungsschicht aus offenporigem, porösem, elastischem Kunststoffmaterial, beispielsweise Weichschaum, aufweist. Die Dämpfungsschicht kann durch einen Rahmen zur Bildung eines Akustik-Bausteins umschlossen sein und besitzt eine Gesamtdicke von maximal 100 mm für einen schmalbandigen Frequenzbereich zwischen etwa 31 Hz und 125 Hz.

Vor allem in gewerblich genutzten Räumen können jedoch Frequenzen des Luftschalls in einer sehr großen Bandbreite bis zu 1,5 kHz auftreten, welche von dem bekannten Schallabsorber nicht wirksam absorbiert werden können.

Die Aufgabe der Erfindung besteht demgegenüber darin, einen Schallabsorber der eingangs erwähnten Art zu schaffen, welcher Luftschall in einem breiten Frequenzbereich absorbiert.

Diese Aufgabe wird erfindungsgemäß durch die kennzeichnenden Merkmale des Anspruchs 1 gelöst.

Vorteilhafte Weiterbildungen und Ausgestaltungen des erfindungsgemäßen Schallabsorbers ergeben sich aus den Unteransprüchen.

Bei dem erfindungsgemäßen Schallabsorber besteht die poröse Dämpfungsschicht aus einem komprimierten Stapel von mehr als zwei einzelnen Dämpfungsplatten, deren Anzahl entsprechend der gewünschten Bandbreite wählbar ist. Auf diese Weise lässt sich die Bandbreite des erfindungsgemäßen Schallabsorbers für den absorbierten Luftschall nach Bedarf ausdehnen und variieren.

Die Erfindung wird nachstehend an Hand der Zeichnungen erläutert. Es zeigt:
- Fig. 1: eine Draufsicht auf eine Ausführungsform eines Schallabsorbers mit einem erfindungsgemäßen Stapel aus komprimierten Dämpfungsplatten 131;
- Fig. 2: eine perspektivische Ansicht eines als Säule zu einem Akustik-Baustein ausgebildeten Schallabsorbers;
- Fig. 3: eine perspektivische Ansicht des mit einem Stoffstrumpf überzogenen Akustik-Bausteins nach Fig. 3.

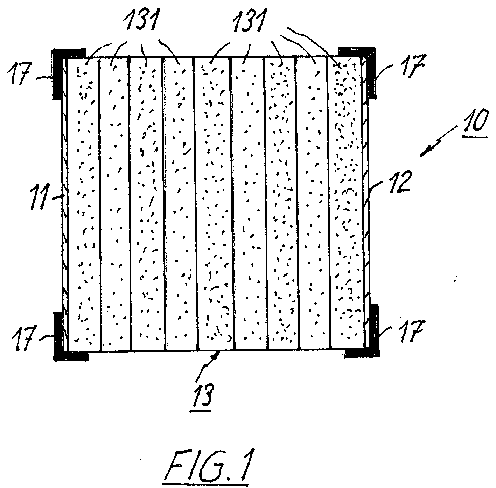

Der in Fig. 1 in Draufsicht dargestellte Schallabsorber 10 weist an zwei gegenüberliegenden Stirnseiten jeweils eine Platte 11 bzw. 12 auf, für welche insbesondere eine durchgehende oder eine gelochte Stahlplatte mit beispielsweise einer Dicke im Bereich zwischen 1 mm bis 2 mm vorgesehen ist. Anstelle von Stahlplatten können für die Platten 11, 12 auch Holzplatten, insbesondere MDF-Platten in einer Stärke von beispielsweise bis 3 mm verwendet werden.

Wie aus Fig. 1 weiter hervorgeht, ist zwischen den äußeren Platten 11, 12 eine elastische, poröse Dämpfungsschicht 13 insbesondere aus einem offenporigen, elastischen Kunststoffmaterial wie beispielsweise PET-Vlies oder einem Melaminharz-Schaumstoff angeordnet. Ein geeigneter Melaminharz-Schaumstoff ist beispielsweise unter der Bezeichnung Basotect® im Handel erhältlich.

Die Platten 11 bzw. 12 sind für die Beeinflussung der Raumakustik nicht erforderlich. Vielmehr reicht die nachstehend beschriebene Ausbildung der Dämpfungsschicht 13 allein aus, um die Bandbreite des erfindungsgemäßen Schallabsorbers für den absorbierten Luftschall zu vergrößern.

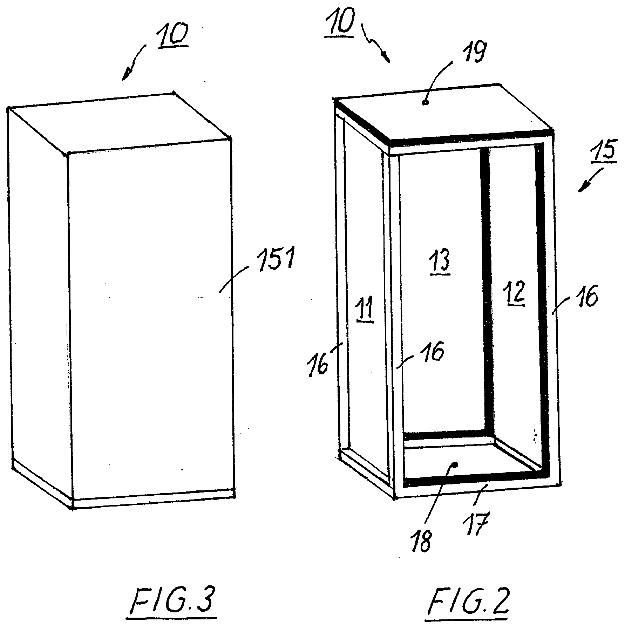

Erfindungsgemäß besteht die Dämpfungsschicht 13 aus einem komprimierten Stapel von mehr als zwei einzelnen Dämpfungsplatten 131. Bei Verwendung von endseitigen Platten 11, 12 sind die Dämpfungsplatten 131 mit ihren Längsseiten parallel zu den Platten 11, 12 angeordnet. Im dargestellten Beispielsfall von Fig. 1 besteht die Dämpfungsschicht 13 aus einem Stapel von insgesamt neun eng aneinander gepressten Dämpfungsplatten131, die durch die Platten 11, 12 und einen mit Eckwinkeln 17 versehenen Gestell-Rahmen 15 (Fig. 2) zusammen gehalten werden. Beispielsweise haben die Dämpfungsplatten 131 im nicht-komprimierten Zustand eine Stärke von je 40 mm. In dem Stapel werden die neun, jeweils 40 mm starken Dämpfungsplatten 131 von dem ursprünglichen Gesamtmaß von 360 mm auf 350 mm komprimiert. Die randseitig angeordneten Dämpfungsplatten 131 des komprimierten Stapels können eine verhärtete Oberfläche aufweisen. Zusätzlich können alle vier Stirnseiten des komprimierten Stapels mit jeweils einer Platte aus Melaminharz-Schaumstoff wie beispielsweise Basotect® ausgekleidet sein.

Der Stapel aus Dämpfungsplatten 131 ist an seinen beiden Flanken offen, so dass Luftschall direkt auf beide Flanken des Stapels aus Dämpfungsplatten 131 auftrifft. Das offenporige Material der Dämpfungsplatten 131 wirkt somit direkt als poröser Absorber speziell bei mittleren und höheren Frequenzen, wie aus den nachfolgenden Messergebnissen ersichtlich ist. Hierzu wurde die Schallabsorption des Stapels aus offenporigen Dämpfungsplatten 131 nach DIN EN ISO 354 in einem Hall-Raum mit einem Volumen von 85,92 m³ und einer Oberfläche von 122,48 m² für vier zufällig verteilte Prüflinge mit den Abmessungen 1100x350x350 mm bei Breitbandrauschen als Prüfschall gemessen. Es ergaben sich folgende äquivalente Schallabsorptionsflächen bei Frequenzen von 100 Hz bis 5000 Hz:

| **Aquivalente Schallabsorptionsfläche A je Element** | | |
|---|---|---|
| Frequenz [Hz] | Terzen | Oktaven |
| | A [m²] | A [m²] |
| 100 | **0,44** | 0,7 |
| **125** | **0,84** | |
| 160 | **0,90** | |
| 200 | **1,22** | 1,4 |
| **250** | **1,44** | |
| 315 | **1,45** | |
| 400 | **1,61** | 1,6 |
| **500** | **1,70** | |
| 630 | **1,62** | |
| 800 | **1,70** | 1,7 |
| **1000** | **1,74** | |
| 1200 | **1,72** | |
| 1600 | **1,53** | 1,6 |
| **2000** | **1,61** | |
| 2500 | **1,60** | |
| 3150 | **1,52** | 1,5 |
| **4000** | **1,54** | |
| 5000 | **1,38** | |

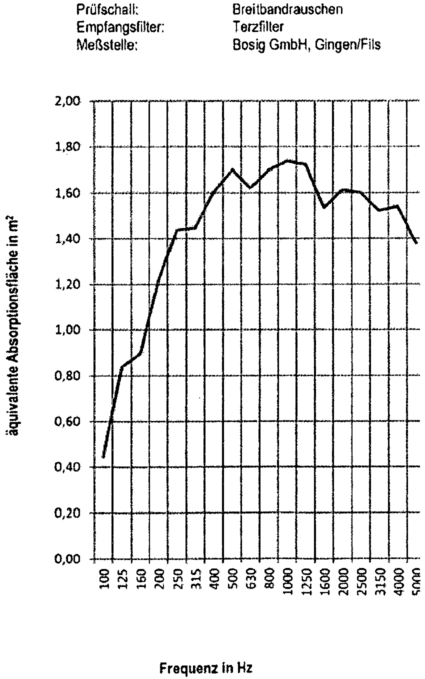

Ein als Säule zu einem Akustik-Baustein ausgebildeter Schallabsorber ist in Fig.2 perspektivisch dargestellt. Der dargestellte Akustik-Baustein weist einen Gestell-Rahmen 15 auf, welcher beispielsweise aus Profilstangen 16 und dreidimensionalen Eckwinkeln 17 aus Aluminium oder Holz besteht. Die Profilstangen 16 und dreidimensionalen Eckwinkel 17 sind zu einem quaderförmigen oder zylindrischen Körper in Form einer Säule zusammengesteckt. Die längeren Profilstangen 16 haben vorzugsweise eine zusätzliche Aufnahmenut für die Resonanz-Platten 11, 12. Eine Bodenplatte 18 und eine Deckelplatte 19 schließen den Gestell-Rahmen 15 zu dessen Unterseite und Oberseite ab. Die Bodenplatte 18 kann aus Metall bestehen, um durch das Gewicht der Metallplatte die Standfestigkeit des Akustik-Bausteins zu erhöhen. Oberhalb der Deckelplatte 19 kann beispielsweise zusätzlich eine Dekorplatte (vorzugsweise in einer Stärke von 10 mm) als Abstellplatte wie bei einem Möbelstück ausgebildet sein, also aus Holz, Stein oder Kunststoff bestehen. Die beispielweise aus Metall (Stahl, Messing) zwecks Erhöhung der Standsicherheit ausgebildete Bodenplatte 18 kann mit nicht gezeigten höhenverstellbaren Füßen versehen sein. Der gesamte Gestell-Rahmen 15 kann mit einem Stoffstrumpf 151 überzogen sein, wie in Fig. 3 gezeigt ist. Der Stoffstrumpf 151 kann einfarbig ausgeführt oder mit einem beliebigen Dekor bedruckt sein. Der beispielsweise als Schlauch mit oder ohne Reißverschluss ausgebildete Stoffstrumpf 151 kann entweder nur die Mantelfläche des quaderförmigen oder zylindrischen Körper bedecken oder kann sich auch über der Deckelplatte 19 erstrecken. Die Höhe des Gestell-Rahmens 15 liegt beispielsweise im Bereich zwischen 1000 bis 2000 mm, die Breite liegt beispielsweise bei 350 mm.

## Patentansprüche

1. Schallabsorber zur Beeinflussung der Akustik eines Raumes, mit einer porösen Dämpfungsschicht (13), **dadurch gekennzeichnet, dass** die poröse Dämpfungsschicht (13) aus einem komprimierten Stapel von mehr als zwei einzelnen Dämpfungsplatten (131) besteht.

2. Schallabsorber nach Anspruch 1, **dadurch gekennzeichnet, dass** der komprimierte Stapel aus mehr als fünf einzelnen Dämpfungsplatten (131) besteht.

3. Schallabsorber nach Anspruch 1 oder 2, **dadurch gekennzeichnet, dass** jede Dämpfungsplatte (131) aus einem PET-Vlies oder einem Melaminharz-Schaumstoff besteht.

4. Schallabsorber nach Anspruch 3, **dadurch gekennzeichnet, dass** die randseitig angeordneten Dämpfungsplatten (131) des komprimierten Stapels eine verhärtete Oberfläche aufweisen.

5. Schallabsorber nach einem der Ansprüche 1 bis 4, **dadurch gekennzeichnet, dass** der Stapel aus Dämpfungsplatten (131) in einem Gestell-Rahmen (15) eines Akustik-Bausteins gehaltert ist.

6. Schallabsorber nach Anspruch 5, **dadurch gekennzeichnet, dass** der Gestell-Rahmen (15) aus Profilstangen (16) und dreidimensionalen Eckwinkeln (17) zu einem quaderförmigen oder zylindrischen Körper zusammengesteckt ist.

7. Schallabsorber nach Anspruch 5 oder 6, **dadurch gekennzeichnet, dass** der Gestell-Rahmen (15) mit einer Bodenplatte (18) und einer Deckelplatte (19) versehen ist.

8. Schallabsorber nach Anspruch 7, **dadurch gekennzeichnet, dass** die Bodenplatte (18) aus einem Schwermetall besteht.

9. Schallabsorber nach Anspruch 7 oder 8, **dadurch gekennzeichnet, dass** oberhalb der Deckelplatte (19) eine Dekorplatte als Abstellplatte wie bei einem Möbelstück ausgebildet ist.

10. Schallabsorber nach einem der Ansprüche 5 bis 9, **dadurch gekennzeichnet, dass** der Gestell-Rahmen (15) mit einem Stoffstrumpf (151) überzogen ist.
